## Europäisches Patentamt
## European Patent Office
## Office européen des brevets

(19)

(11) Veröffentlichungsnummer: **0 035 732**
**B1**

(12) # EUROPÄISCHE PATENTSCHRIFT

(45) Veröffentlichungstag der Patentschrift:
01.08.84

(21) Anmeldenummer: 81101494.3

(22) Anmeldetag: 02.03.81

(51) Int. Cl.³: **G 21 C 15/00,** G 21 C 11/08

(54) Wärmedämmung für den gewölbten Boden- und/oder Deckelbereich eines Druckbehälters.

(30) Priorität: 10.03.80 DE 3009134

(43) Veröffentlichungstag der Anmeldung:
16.09.81 Patentblatt 81/37

(45) Bekanntmachung des Hinweises auf die Patenterteilung:
01.08.84 Patentblatt 84/31

(84) Benannte Vertragsstaaten:
AT BE CH DE FR GB IT LI LU NL SE

(56) Entgegenhaltungen:
DE - A - 2 451 448
DE - A - 2 648 760
DE - A - 2 709 914
GB - A - 846 753
GB - A - 894 407
GB - A - 1 529 811

(73) Patentinhaber: **KRAFTWERK UNION AKTIENGESELLSCHAFT, Wiesenstrasse 35, D-4330 Mülheim (Ruhr) (DE)**
Patentinhaber: **Grünzweig + Hartmann Montage GmbH, Westendstrasse 17, D-6700 Ludwigshafen/Rhein (DE)**

(72) Erfinder: **Scholz, Manfred, Zeiss-Strasse 8, D-8520 Erlangen (DE)**
Erfinder: **Fricker, Wolfgang-Peter, An der Quelle 23, D-6713 Freinsheim (DE)**
Erfinder: **Gollasch, Bernd, Pottensteiner Strasse 16, D-8500 Nürnberg (DE)**

(74) Vertreter: **Mehl, Ernst, Dipl.-Ing. et al, Postfach 22 01 76, D-8000 München 22 (DE)**

## Beschreibung

Die Erfindung bezieht sich auf eine Wärmedämmung für gewölbten Boden- und/oder Deckelbereich eines Druckbehälters gemäss Oberbegriff des Anspruchs 1.

Die Sicherheitsvorschriften und -vorkehrungen für Kernkraftwerkanlagen unterliegen einer fortlaufenden Weiterentwicklung. So ist man in den letzten Jahren auch dazu übergegangen, die Stutzengassen bei Deckelkalotten von Druckbehältern einer Wiederholungsprüfung mit Ultraschall zu unterziehen. In der älteren, nicht vorveröffentlichten DE-OS 28 49 763 (=VPA 78 P 9417 BRD) ist eine solche Prüfeinrichtung beschrieben. Das besondere Problem, das sich dabei stellt, ist, die Wärmedämmung bei mit Stutzendurchführungen versehenen Deckelkalotten von Druckbehältern so auszubilden, dass sie leicht de- und remontierbar ist. Zur Wiederholungsprüfung muss die Kernkraftwerkanlage stillgesetzt werden, und jede zusätzliche Stillstandzeit, die durch aufwendige Demontage- und Remontage-Arbeiten an der Wärmedämmung verursacht wird, bedingt zusätzliche Kosten.

Es stellt sich die Aufgabe, die Wärmedämmung der eingangs definierten Art so auszubilden und mit solchen Mitteln zu versehen, dass sie bequem und schnell de- und remontierbar ist. Das ist nicht nur für die sogenannte Nullmessung (vor dem Kritischwerden des Kernreaktors) von Bedeutung, sondern insbesondere für die Wiederholungsprüfungen während des Stillstandes einer bereits in Betrieb befindlich gewesenen Kernkraftanlage, da dann an den zu inspizierenden Druckbehältern eine Strahlung auftritt, die das Arbeiten an diesen Komponenten nur in Schutzanzügen und nur für relativ kurze Zeit zulässt. Zu den Primärkreiskomponenten, die neuerdings in ihrem Stutzenbereich einer Wiederholungsprüfung unterzogen werden müssen, gehört der Druckhalter, der einen mit Heizstäben und entsprechenden Heizstabdurchführungen bestückten Boden aufweist, der in festgelegten Intervallen wiederholungsgeprüft werden muss. Vorgesehen ist dabei die Ultraschallprüfung der Stege zwischen den Bohrungen der Heizstabdurchführungen. Der Erfindung liegt mithin die spezielle Aufgabe zugrunde, eine bequem und schnell zu de- und remontierende Wärmedämmung für einen Druckhalterboden zu schaffen, die es zulässt, die Wiederholungsprüfung mit nur geringer Vorbereitungszeit (Freilegen der zu prüfenden Stutzengassen durch Entfernen der Wärmedämmung) durchzuführen.

Erfindungsgemäss wird die gestellte Aufgabe bei einer Wärmedämmung gemäss Oberbegriff des Anspruchs 1 durch die im Kennzeichen des Anspruchs 1 angegebenen Merkmale gelöst. Weiterbildungen des Erfindungsgegenstandes sind in den Unteransprüchen beschrieben.

Die mit der Erfindung erzielbaren Vorteile sind vor allem darin zu sehen, dass sich die Vorbereitung der Wiederholungsprüfung schnell und bequem durchführen lässt: Es sind lediglich Schnellverschlüsse an der Wärmedämmhaube zu lösen und letztere auf die Lagerposition auf der Montagebühne mittels Greifzügen bzw. manuell herabzulassen. Damit wird der Druckbehälterboden bzw. Druckhalterboden für die Wiederholungsprüfung zugänglich. Aufgrund der Gestaltung der Wärmedämmhaube ist im Falle der Druckhalter-Wiederholungsprüfung eine Demontage der Stromkabel der Druckhalter-Heizstäbe nicht erforderlich.

Im folgenden wird anhand eines in der Zeichnung dargestellten Ausführungsbeispiels die Erfindung noch näher erläutert. Darin zeigt in vereinfachter, schematischer Darstellung unter Fortlassung der für das Verständnis der Erfindung nicht erforderlichen Teile:

Fig. 1 einen Druckhalter in Gesamtansicht mit der Wärmedämmung nach der Erfindung in seinem unteren Kalottenbereich;
Fig. 2 die Ansicht auf die untere Bodenkalotte von unten;
Fig. 3 einen Ausschnitt aus Fig. 2 vergrössert;
Fig. 4 den Schnitt längs der Linie IV-IV aus Fig. 3;
Fig. 5 die Einzelheit W aus Fig. 4;
Fig. 6 die Einzelheit X aus Fig. 4;
Fig. 7 die Einzelheit Y aus Fig. 4;
Fig. 8 die Einzelheit Z aus Fig. 4 und
Fig. 9 die Draufsicht von unten auf die Einzelheit Z nach Fig. 8.

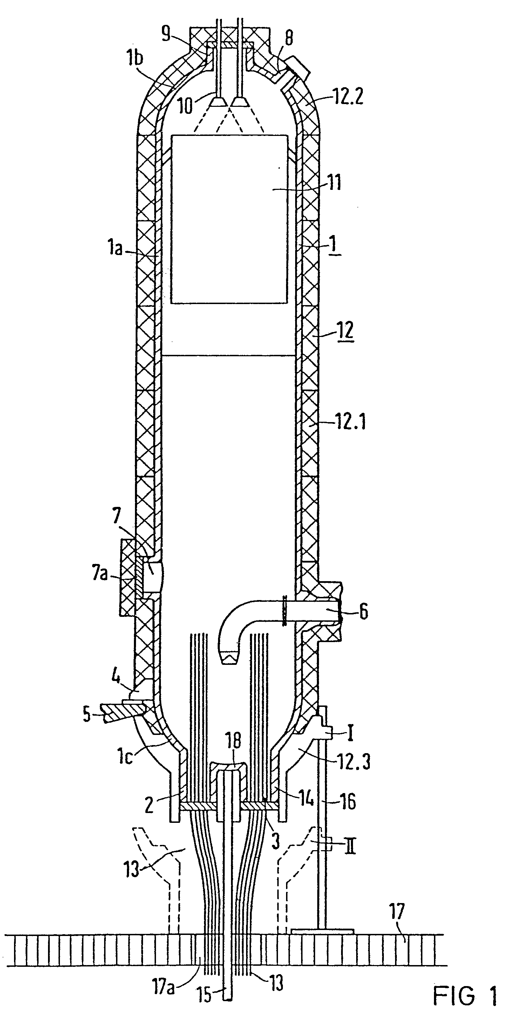

Der in Fig. 1 dargestellte Druckhalter 1 ist ein stehender Druckbehälter von im wesentlichen hohlzylindrischer Form. Er ist aus einem zylindrischen Mantel 1a und je einem oberen und einem unteren Halbkugelboden 1b, 1c zusammengesetzt. Der untere Boden weist Bodenstutzen 2 zur gas- und druckdichten Durchführung der Druckhalter-Heizstäbe 3 auf. Etwas oberhalb des unteren Bodens ist eine Tragpratze 4 für ein nicht näher dargestelltes Auflager 5 erkennbar, ferner ein in die Druckhalterwand eingeschweisster Stutzen 6 für die Volumenausgleichsleitung und ein Mannloch 7 mit Mannlochdeckel 7a. Im oberen Boden 1b befinden sich Stutzen 8 für die Abblase- und Sicherheitsventile sowie in der Mitte des Bodens der Stutzen 9 für das Sprühsystem 10. 11 ist ein innerhalb des Druckhalters 1 befestigtes Schutzhemd, welches den oberen Teil des Druckhalters 1 vor Thermoschocks, bedingt durch kaltes Sprühwasser, schützt.

Der Druckhalter 1 ist von einer als Ganzes mit 12 bezeichneten Wärmedämmung eingeschlossen, welche aus einzelnen zylindrischen Schüssen 12.1 sowie aus der oberen Bodenhaube 12.2 und der unteren Bodenhaube 12.3 besteht. Die Schüsse 12.1 sowie die obere Bodenhaube 12.2 können wiederum in einzelne Segmente unterteilt sein. Jedes der Segmente besteht zweckmässigerweise aus einem Dämmstoff auf der Basis von Mineralfasern oder Mineralwolle, welcher von Metallfolien, insbesondere aus austenitischem Blech, eingeschlossen ist. Die einzelnen Segmente sind in den Bereichen, die wiederholungsprüfbar sein sollen, leicht de- und remontabel angeordnet und hierzu insbesondere mittels Spannverschlüssen (nicht dargestellt) am Umfang des Druckhalters zu befestigen.

Die vorliegende Erfindung befasst sich nun mit der Wärmedämmung für den gewölbten Boden 1c des Druckhalters 1, welche in diesem Bereich von einer Vielzahl von Bodenstutzen 2 durchdrungen ist, die achsparallel zum Druckhalter verlaufen. Die Boden-Stutzen 2 und die Heizstäbe 3 sind in Fig. 1 lediglich vereinfacht dargestellt; in Wirklichkeit sind über die Fläche des Bodens 1c nicht nur zwei sondern eine Vielzahl von Boden-Stutzen mit entsprechenden einzelnen Heizstäben verteilt, worauf weiter unten noch eingegangen wird. Die stangenförmigen, mit schematisch angedeuteten elektrischen Anschlussleitungen 13 versehenen, in das Innere des Druckhalters 1 ragenden elektrischen Heizelemente 3 sind, wie erwähnt, druckdicht und elektrisch isoliert durch die Bodenstutzen 2 des Druckhalters hindurchgeführt. Erfindungsgemäss ist nun die Wärmedämmung 12.3 als einteilige Wärmedämmhaube ausgeführt, welche für jeden Bodenstutzen 2 je einen Durchtritt 41 aufweist.

Die Wärmedämmhaube 12.3 ist an achsparallel zum Druckhalter angeordneten Führungselementen 15, 16 zentriert und axial verschiebbar derart gehalten, dass die Wärmedämmhaube 12.3 aus ihrer dargestellten weitgehend konvektionsdichten Betriebsposition I in eine gestrichelt dargestellte Abstellposition II auf eine Montageplattform 17 abgesenkt werden kann, bei welcher die Stutzengassen 18 des Druckhalters zur Wiederholungsprüfung freigelegt sind. Nach durchgeführter Wiederholungsprüfung kann die Wärmedämmhaube 12.3 aus ihrer Abstellposition II wieder in die Betriebsposition I angehoben werden. Zum Absenken und Anheben der Wärmedämmhaube 12.3 können nicht dargestellte Greifzüge oder Flaschenzüge eingesetzt werden, die manuell oder mittels kleiner Hubmotoren leicht zu bedienen sind. Die Montageplattform 17 ist eine Metallgitterkonstruktion, die eine zentrale Öffnung 17a aufweist, durch welche die Stromzuführungskabel 13 der Heizstäbe 3 und die zentrale Entwässerungsleitung 15 des Druckhalters 1 nach unten hindurchgeführt sind. Zur Führung der Wärmedämmhaube 12.3 beim Absenken und Wiederanheben dient die zentrale Entwässerungsleitung 15 und mindestens eine weitere vertikale Führungsstange 16, wobei die Wärmedämmhaube 12.3 mittels aus Fig. 1 nicht näher ersichtlichen Führungsbüchsen an der Entwässerungsleitung 15 und der Führungsstange 16 in Achsrichtung gleiten kann. Die Kabel 13 brauchen beim Absenken der Wärmedämmhaube 12.3 nicht entfernt zu werden; die Haube ist vielmehr, wie im folgenden noch erläutert, so aufgebaut, dass ihre die Heizstab-Durchführungsstutzen umfassenden Dichtbüchsen über die Kabel gleiten.

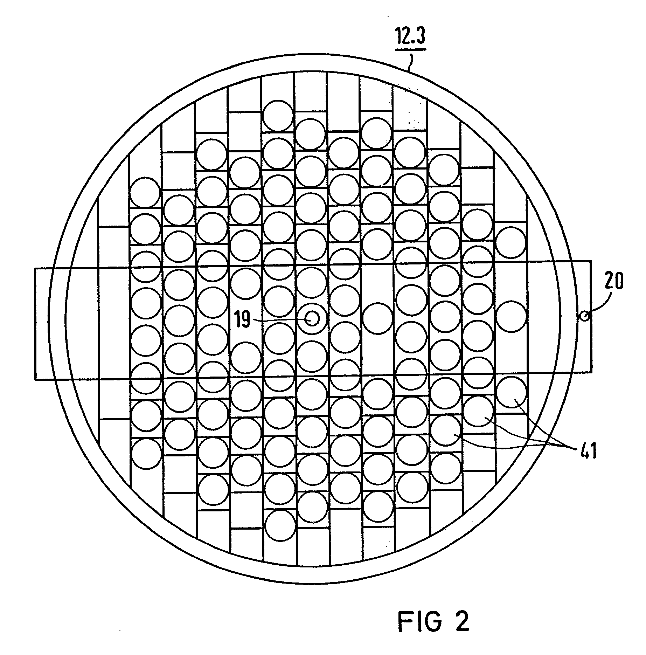

Fig. 2 zeigt, wie gesagt, die Draufsicht auf die untere Bodenkalotte des Druckhalters mit einer Vielzahl von den Bodenstutzen zugeordneten Durchtritten 41 der Wärmedämmhaube, mit einer zentrisch angeordneten Büchse 19 für die zentrale Entwässerungsleitung 15 (Fig. 1) und der Vertikal-Führungsbuchse 20 für die nach unten ragende Führungsstange 16 (Fig. 1).

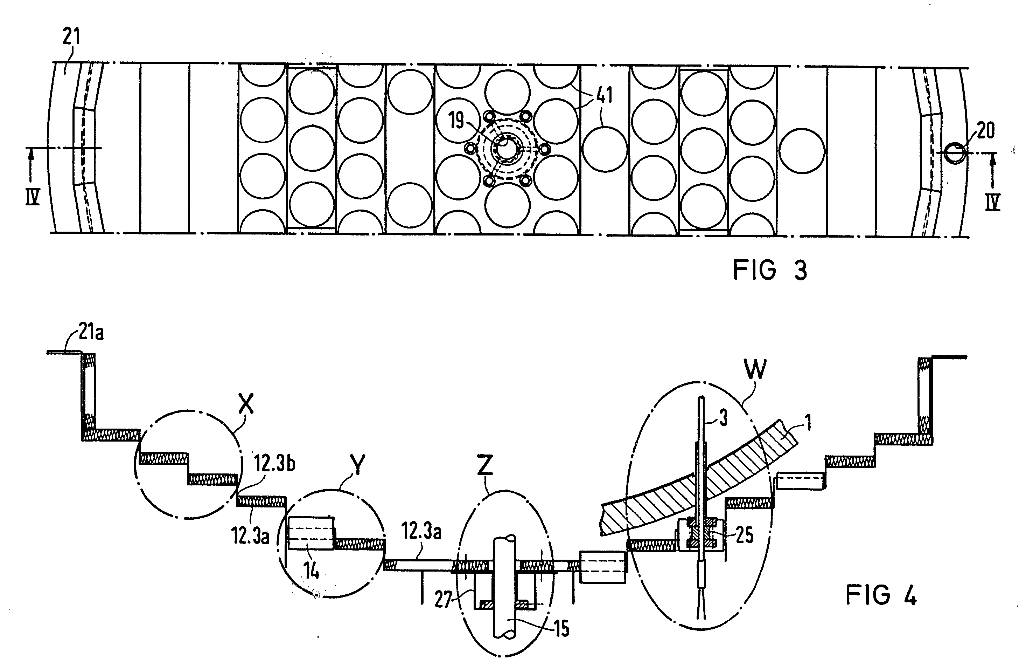

Die Vergrösserung nach Fig. 3 zeigt, dass die Wärmedämmhaube 12.3 an ihrem Aussendurchmesser mit einer Blechumfassung 21 versehen ist, welche in Betriebsposition I (Fig. 1) mit Dichtflächen 21a (siehe Fig.4) in weitgehend konvektionsdichtem Eingriff mit dem Übergangs- und/ oder zylindrischen Bereich der Wärmedämmung 12, 12.1 des Druckhalters 1 (siehe Fig. 1) bringbar ist. Die Blechumfassung 21 erhöht darüber hinaus die Stabilität der Haube 12.3 und ihre Verwindungssteifigkeit.

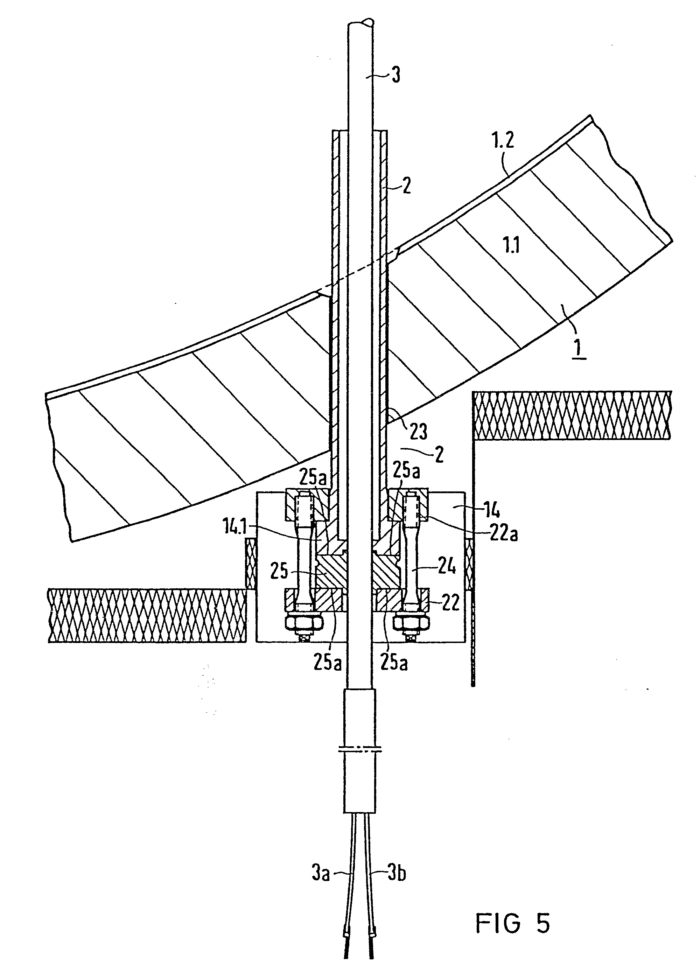

Fig. 4 in Verbindung mit Fig. 5 zeigt im Detail, dass die Haube 12.3 für jeden Bodenstutzen je einen Durchtritt aufweist. Dabei erfolgt die weitgehend konvektionsdichte Abdichtung der Haube 12.3 zu den den Stutzen 2 und den Heizstäben 3 zugeordneten Heizstabflanschen 22 über Dichtbüchsen 14. Im folgenden ist nur noch von Dichtbüchsen 14 die Rede, wenn auch gesagt werden muss, dass grundsätzlich für die konvektionsdichten Durchtritte auch ein anderes Durchführungselement denkbar ist.

In Fig. 5 ist mit 1.1 die Wand des Druckhalters 1 bezeichnet, mit 1.2 die austenitische Innenplattierung dieser Wand. In achsparallel zueinander verlaufende Durchgangsbohrungen 23 dieser Wand 1.1 sind die Bodenstutzen 2 eingefügt und eingeschweisst. An ihrem unteren Ende sind die Bodenstutzen 2 mit einem verstärkten Kupplungsflansch 14.1 versehen, ferner mit einem diesen Flansch hintergreifenden, auf den Hals des Bodenstutzens 2 aufgeschobenen Kragen 22a, welcher mit einem Kranz von Gewindebohrungen zum Einschrauben der Dehnschrauben 24 versehen ist. Durch letztere wird der Flanschdeckel 22, der ebenso wie die Dichtungsscheibe 25 eine zentrische Bohrung aufweist, gegen den Kupplungsflansch 14.1 gezogen und presst dabei die Dichtungsscheibe 25 mit ihren Dichtflächen 25a gegen entsprechende Gegendichtflächen am Kupplungsflansch 14.1 und an der Innenseite des Deckels 22. Die Dichtungsscheibe 25 ist eine Stahlscheibe, die mit dem Aussenumfang des Heizstabes 3 dichtend verschweisst ist. 3a, 3b sind die in den Heizstab 3 zu entsprechenden, nicht dargestellten Heizwendeln hingeführten elektrischen Zuleitungsdrähte.

Die Dichtbüchse 14 umgreift sowohl den Ringkragen 22a als auch den Deckel 22 an deren Aussenumfang. Dabei ist der Aussendurchmesser des Ringkragens 22a etwas grösser als derjenige des Deckels 22, so dass die Dichtbüchse 14 beim Aufschieben der Haube 12.3 über den Aussenumfang des Deckels 22 relativ leicht mit Spiel übergeschoben werden kann und dann am Aussenumfang des Ringkragens 22a einen Dichtsitz, d.h. eine Konvektionsdichtung, bildet.

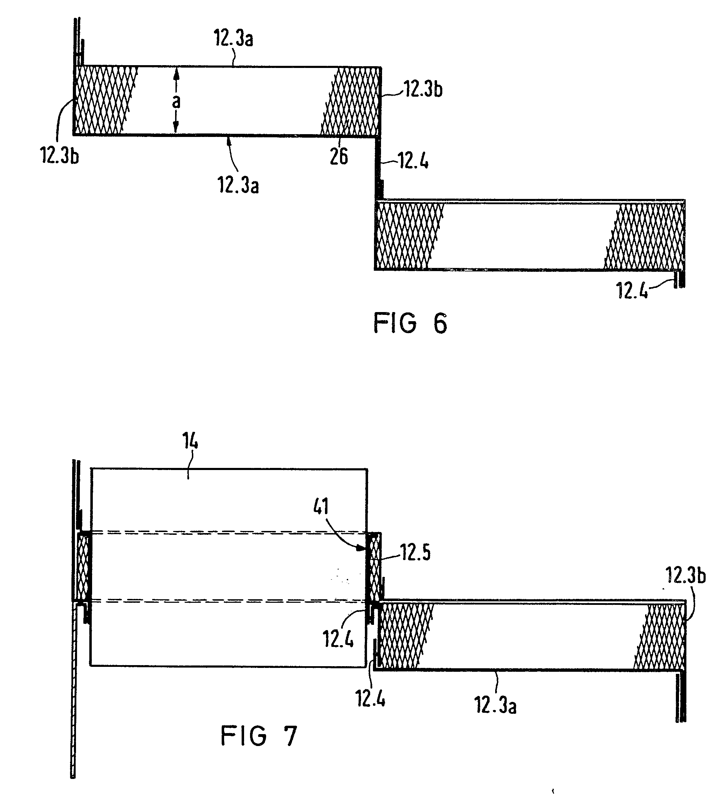

Die Dämmhaube 12.3 besteht vorzugsweise aus austenitischem Stahlblech, welches korrosionsbeständig ist; sie ist aus entsprechenden scheibenförmigen Teilen 12.3a und aus zylindrischen Teilen 12.3b zusammengeschweisst. Die Scheibenteile 12.3a sind jeweils mit Abstand a zueinander angeordnet (siehe Fig. 6) und bilden mit ihren Umfangswänden 12.3b Ringkästen, in welchen der Dämmstoff 26 angeordnet und eingeschlossen ist. Als Dämmstoff 26 kommt insbesondere ein Mineralfaserprodukt in Frage. Als besonders vorteilhaft hat sich erwiesen, wenn dafür ein Spezialdämmstoff mit einer niedrigeren Wärmeleitfähigkeit als diejenige der ruhenden Luft verwendet wird, der unter dem Warenzeichen «MINILEIT» im Handel ist. Es handelt sich dabei um einen relativ hoch verdichteten Dämmstoff kleiner Partikelgrösse auf der Basis von Siliziumdioxid $SiO_2$, bei dem die zwischen den Partikeln eingeschlossenen Hohlräume kleiner sind als die freien Weglängen der Gasmoleküle. Der Vorteil eines solchen Dämmstoff besteht darin, dass die Dämmdicke im Vergleich zu einem normalen Mineralfaser-Dämmstoff auf ca. ⅓ bis ⅕ reduziert werden kann, wodurch eine verhältnismässig leichte Konstruktion erhalten wird. Die Scheiben- und Zylinderteile 12.3a, 12.3b sind mit entsprechenden Überständen 12.4 versehen, die, vgl. Fig. 6 und 7, einander überlappen, wobei die Überlappungen punktgeschweisst sind.

Wie es Fig. 7 zeigt, sind die Dichtbüchsen 14 mit ihrem Aussenumfang jeweils am Innenumfang von Umkleidungsblechen 12.5 schwimmend gelagert, welche die Durchtrittsöffnungen 41 der Haube 12.3 begrenzen. Diese Umkleidungsbleche 12.5 weisen gleichfalls die schon erwähnten Überstände 12.4 auf und sind mittels dieser mit den angrenzenden Scheiben- und Zylinderteilen der Haube 12.3 mittels Punktschweissen verbunden. Die schwimmende Lagerung ergibt sich durch die Elastizität der Umkleidungsbleche 12.5 und ihrer Flansche 12.4. Die Dichtbüchse 14 kann mittels einiger Schweisspunkte an den Umkleidungsblechen 12.5 befestigt sein. Die schwimmende Lagerung ist deshalb besonders vorteilhaft, weil beim Aufsetzen der Haube 12.3 dadurch geringfügige Toleranzen ausgeglichen werden können, d.h. der in seinem Aussenumfang etwas kleinere Deckel 22 passt auf jeden Fall in den Innenumfang der Dichtbüchse 14, welche dadurch zentriert wird und dann beim weiteren Aufschieben ihren Sitz an dem Ringkragen 22a findet.

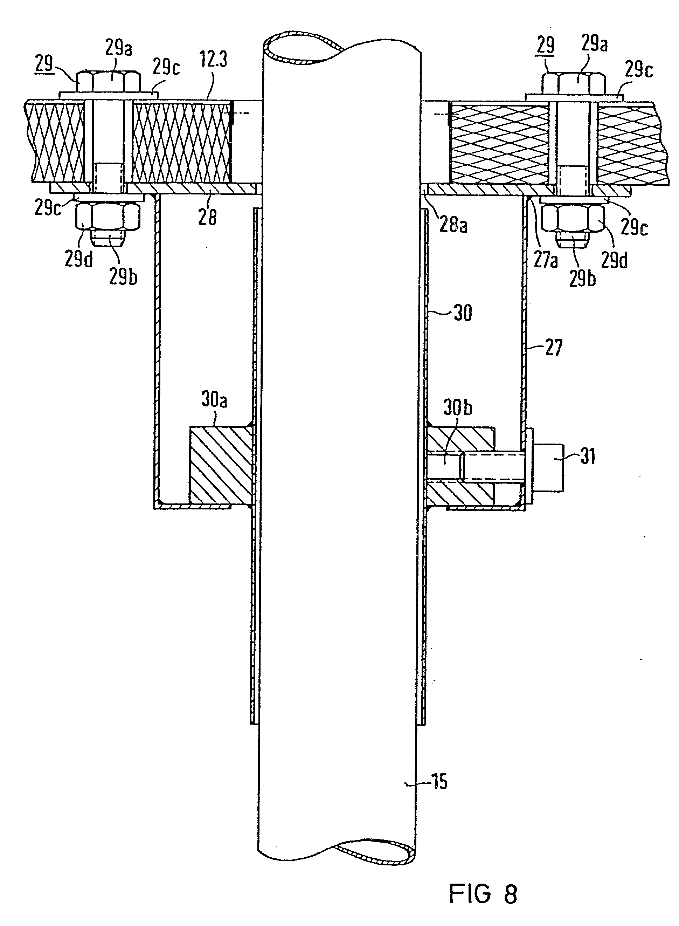

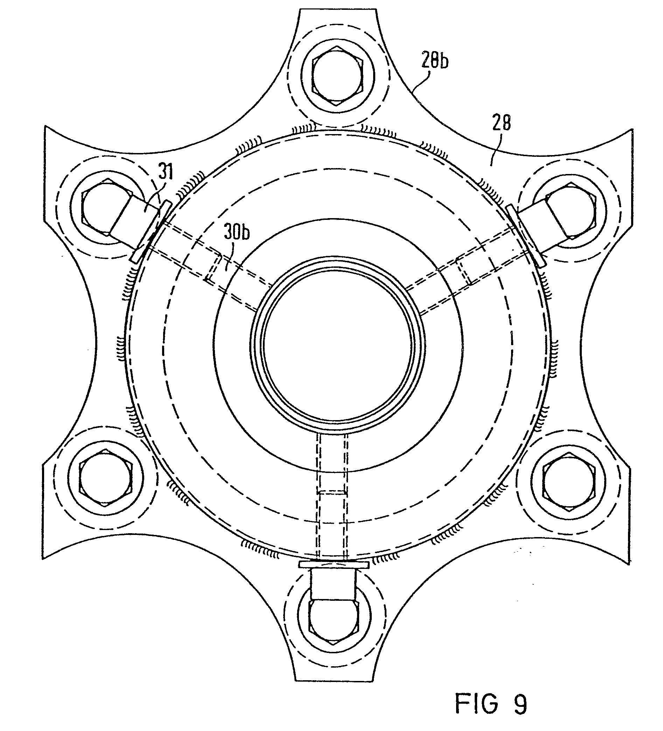

Fig. 4 in Verbindung mit Fig. 8 und 9 zeigt deutlicher, dass die etwa in der Längsachse des Druckhalters 1 verlaufende Entwässerungsleitung 15 von einer zentrisch an der Haube 12.3 angeordneten Büchse 27 umfasst ist.

Zur Befestigung der Büchse 27 ist die Haube 12.3 mit einer Ankerplatte 28 versehen, welche eine Durchgangsöffnung 28a für die Entwässerungsleitung 15 aufweist. Die Büchse 27 ist mit einer umlaufenden Schweissnaht 27a (siehe auch Fig. 8 und 9) an der Ankerplatte 28 festgeschweisst. Letztere ist wiederum mit der Haube 12.3, d.h. ihren zentrischen Blechscheiben 12.3a, mittels der entsprechende Durchgangsbohrungen durchdringenden Schraubenbolzen 29 verbunden, wobei letztere wiederum einen Kopf 29a, einen Schaft 29b, Beilagscheiben 29c und die eigentliche Mutter 29d aufweisen. Zum zentrischen Ausrichten der Haube 12.3 in bezug auf die Entwässerungsleitung 15 weist die Büchse 27 einen inneren Hülsenteil 30 auf, welcher mit einem Ringkragen 30a an seinem äusseren Umfang versehen ist. In letzteren sind über den Umfang verteilt Gewindebohrungen 30b eingeschnitten, und in diese sind die Justierschrauben 31 vom Aussenumfang der Büchse 27 her eingeschraubt. Es sind, wie es Fig. 9 zeigt, drei gleichmässig über den Umfang verteilte Gewindebohrungen 30b und entsprechende Justierschrauben 31 vorgesehen, so dass nach Art eines Christbaumständers die genaue zentrische Relativlage der Haube zu der Entwässerungsleitung 15, die ja als zentrisches Führungselement dient, hergestellt werden kann. Die Ankerplatte 28 ist mit Auszahnungen 28b an ihrem äusseren Umfang versehen, damit, vgl. Fig. 3, der Platz für die Dichtbüchsen 14 frei bleibt.

Es versteht sich, dass die Wärmedämmhaube nach der Erfindung nicht nur für Druckhalter und nicht nur für Druckgefässe geeignet ist, deren Stutzenfeld im Bereich der unteren Bodenkalotte angeordnet ist. Die Erfindung lässt sich mit Vorteil auch für andere Druckbehälter, z.B. Reaktordruckbehälter, einsetzen, bei denen die wiederholungszuprüfenden Stutzengassen im Bereich der oberen Deckelkalotte angeordnet sind. Diese ist bei Kernreaktordruckbehältern für Druckwasserreaktoren der Fall, wogegen bei Siedewasserreaktoren im allgemeinen die Steuerstabantriebe durch die Bodenkalotte hindurchgeführt sind, also ähnlich dem dargestellten Druckhalter.

**Patentansprüche**

1. Wärmedämmung für den gewölbten Boden- und/oder Deckelbereich eines Druckbehälters, wobei die Wärmedämmung von einer Vielzahl von Druckbehälter-Stutzen durchdrungen ist, die achsparallel zum Druckbehälter verlaufen und zwischen sich sogenannte Stutzengassen bilden, dadurch gekennzeichnet, dass die Wärmedämmung als einteilige Wärmedämmhaube (12.3) ausgeführt ist, welche für jeden Druckbehälter-Stutzen (2) je einen Durchtritt (41) aufweist, und dass die Wärmedämmhaube derart an achsparallel zum Druckbehälter angeordneten Führungselementen (15, 16) zentriert und axial verschiebbar gehaltert ist, dass die Wärmedämmhaube (12.3) aus ihrer weitgehend konvektionsdichten Betriebsposition (I) in eine Abstellposition (II) auf eine Montageplattform (17) absenkbar ist, bei welcher die Stutzengassen des Druckbehälters (1) freigelegt sind und umgekehrt.

2. Wärmedämmung nach Anspruch 1, bei der die Wärmedämmhaube an eine Wärmedämmung angrenzt, die im Übergangsbereich und/ oder im zylindrischen Bereich des Druckbehälters angeordnet ist, dadurch gekennzeichnet, dass die Wärmedämmhaube (12.3) an ihrem Aussendurchmesser mit einer Blechumfassung (21) versehen ist, welche in Betriebsposition mit Dichtflächen (21a) in weitgehend konvektionsdichten Eingriff mit dem Übergangs- und/oder zylindrischen Bereich (12.1) der Wärmedämmung (12) des Druckbehälters (1) bringbar ist.

3. Wärmedämmung nach Anspruch 1 oder 2, dadurch gekennzeichnet, dass für die Wärmedämmhaube (12.3) ein Spezialdämmstoff (26) mit einer niedrigeren Wärmeleitfähigkeit als diejenige der ruhenden Luft verwendet wird.

4. Wärmedämmung nach einem der Ansprüche 1 bis 3 für einen mit Heizelementen bestückten Druckhalterboden in Kernkraftwerken, wobei die stangenförmigen, mit Anschlussleitungen versehenen, in das Innere des Druckhalters ragenden elektrischen Heizelemente druckdicht und elektrisch isoliert durch zugehörige Boden-stutzen des Druckhalters hindurchgeführt sind, dadurch gekennzeichnet, dass die weitgehend konvektionsdichte Abdichtung der Wärmedämmhaube (12.3) zu den Heizstabflanschen (22a, 22) über Dichtbüchsen (14) erfolgt, welche mit ihrem Aussenumfang jeweils am Innenumfang von die Durchtritte (41) begrenzenden Umkleidungsblechen (12.5) der Wärmedämmhaube (12.3) schwimmend gelagert sind.

5. Wärmedämmung nach Anspruch 4, dadurch gekennzeichnet, dass die unterhalb des Druckhalters (1) angeordnete Montageplattform (17) eine zentrale Öffnung (17a) aufweist, durch welche die Stromzuführungskabel (13) der Heizstäbe (3) geführt sind.

6. Wärmedämmung nach Anspruch 4 oder 5, dadurch gekennzeichnet, dass eine etwa in der Längsachse des Druckhalters (1) verlaufende Entwässerungsleitung (15) von einer zentrisch an der Wärmedämmhaube angeordneten Büchse (27) umfasst ist und als Führungselement beim Absenken und Wiederanheben der Wärmedämmhaube (12.3) dient, wobei zur Fixierung der Wärmedämmhaube in Umfangsrichtung mindestens eine in Nähe des Aussenumfangs der Wär-medämmhaube angebrachte Vertikal-Führungs-buchse (20) an mindestens einer vom Druckhalter (1) nach unten ragenden Führungsstange (16) achsparallel zum Druckhalter geführt ist.

### Claims

1. Thermal insulation for the arched bottom and/or cover region of a pressure vessel, in which the thermal insulation is penetrated by a plurality of pressure vessel pipe-shaped connection elements which run so as to be axially parallel to the pressure vessel and which among themselves form so-called connection channels, characterised in that the thermal insulation is designed as a one-piece thermal insulation cap (12.3) which has an opening (41) for each pressure vessel connection element (2); and that the thermal insulation cap is centred by and held so as to be axially displaceable on guide elements (15, 16), which are axially parallel to the pressure vessel, in such a way that the thermal insulation cap (12.3) can be lowered from its largely convection-tight operating position (I) into a turned-off position (II) on an assembly platform (17), in which the connection channels of the pressure vessel (1) are exposed, and vice versa.

2. Thermal insulation according to Claim 1, wherein the thermal insulation cap adjoins a thermal insulation which is arranged in the transition region and/or in the cylindrical region of the pressure vessel, characterised in that at its outer diameter, the thermal insulation cap (12.3) is provided with a sheet metal surround (21) which, in the operating position, can be brought by means of sealing surfaces (21a), into a largely convection-tight engagement with the transition region and/or cylindrical region (12.1) of the thermal insulation (12) of the pressure vessel (1).

3. Thermal insulation according to Claim 1 or 2, characterised in that a special insulating material (26) having a lower thermal conductivity than that of stationary air is used for the thermal insulation cap (12.3).

4. Thermal insulation according to one of Claims 1 to 3 for the base of a pressure reservoir in nuclear power plants which is equipped with heating elements, wherein the rod-shaped electrical heating elements which are provided with connection lines and project into the inside of the pressure reservoir are led through respectively assigned base connection elements of the pressure reservoir so as to be pressure-tight and electrically insulated, characterised in that the largely, convection-tight seal of the thermal insulation cap (12.3) to the heating rod flanges (22a, 22) is effected by means of sealing sleeves (14) which are respectively supported at their outer periphery, so as to float on the inner periphery of surrounding metal sheets (12.5) of the thermal insulation cap (12.3) which bound the openings (41).

5. Thermal insulation according to Claim 4, characterised in that the assembly platform (17) arranged below the pressure reservoir (1) has a central opening (17a), through which the current supply cables (13) of the heating rods (3) are led.

6. Thermal insulation according to Claim 4 or Claim 5, characterised in that a drain pipe (15), which extends approximately in the longitudinal axis of the pressure reservoir (1), is surrounded by a sleeve (27), which is centrally arranged on the heat insulation cap, and serves as a guide element when lowering and re-lifting the thermal insulation cap (12.3), wherein in order to fix the thermal insulation cap in the peripheral direction, at least one vertical guide sleeve (20), which is fastened in the vicinity of the outer periphery of the thermal insulation cap, is guided on at least one guide rod (16), which projects downwardly from the pressure reservoir (1), so as to be axially parallel to the pressure reservoir.

### Revendications

1. Isolation thermique pour les zones de fond et/ou de couvercle voûtées d'un réservoir de pression, du genre dans lequel l'isolation thermique est traversée par un grand nombre d'embouts de réservoir de pression, qui s'étendent parallèlement à l'axe du réservoir de pression et forment entre eux ce que l'on désigne par des ruelles d'embouts, caractérisée par le fait que l'isolation thermique est réalisée sous la forme d'un capot d'isolation thermique (12.3) d'une seule pièce, présentant, pour chaque embout (2) du réservoir de pression, un passage (41), et que le capot d'isolation thermique est centré et monté à déplacement axial sur des éléments de guidage (15, 16) disposés parallèlement à l'axe du réservoir de pression de façon que le capot d'isolation thermique (12.3) puisse être abaissé de sa position de fonctionnement (I) largement étanche du point de vue de la convexion, dans une position de repos (II), sur une plateforme de montage (17), et dans laquelle les ruelles d'embouts du réservoir de pression (1) sont dégagées, et inversement.

2. Isolation thermique selon la revendication 1, dans laquelle le capot d'isolation thermique jouxte une isolation thermique qui est disposée dans la zone de transition et/ou dans la zone cylindrique du réservoir de pression, caractérisée par le fait que le capot d'isolation thermique (12.3) est pourvu, sur son diamètre extérieur, d'une garniture périphérique (21) qui, dans la position de fonctionnement, est susceptible d'être amenée, par des surfaces d'étanchéité (21a), en prise largement étanche du point de vue de la convexion, avec la zone de transition et/ou cylindrique (12.1) de l'isolation thermique (12) du réservoir de pression (1).

3. Isolation thermique selon la revendication 1 ou 2, caractérisée par le fait que l'on utilise pour le capot d'isolation thermique (12.3) une substance isolante spéciale (26) ayant une conductibilité thermique plus faible que celle de l'air au repos.

4. Isolation thermique selon l'une des revendications 1 à 3 pour un fond de pression pour des centrales nucléaires, garnie d'éléments chauffants, les éléments chauffants électriques, de la forme de tiges, pourvus de conducteurs de branchement et pénétrant à l'intérieur du fond de pression traversant, avec étanchéité à la pression et avec isolation thermique, des embouts associés du fond de pression, caractérisée par le fait que la très large étanchéité par convexion du capot d'isolation thermique (12.3) par rapport aux flasques de tiges chauffantes (22a, 22), a lieu à l'aide de douilles d'étanchéité (14) qui sont montées de façon flottante, par leur périphérie extérieure, respectivement au niveau de la périphérie intérieure des tôles de revêtement (12.5) du capot d'isolation thermique (12.3), qui limitent les passages (41).

5. Isolation thermique selon la revendication 4, caractérisée par le fait que la plateforme de montage (17) qui est disposée sous le réservoir de pression (1) comporte une ouverture centrale (17a) par laquelle passent les câbles d'alimentation électrique (13) des tiges de chauffage (3).

6. Isolation thermique selon la revendication 4 ou 5, caractérisée par le fait qu'une conduite de vidange de l'eau (15) qui s'étend à peu près selon l'axe longitudinal du dispositif de pression (1) est entourée par une douille (27) disposée en position centrale sur le capot d'isolation thermique et sert d'élément de guidage lors de l'abaissement et du relevage du capot d'isolation thermique (12.3), la réalisation étant telle que pour fixer le capot d'isolation thermique, dans le sens périphérique, au moins une douille de guidage verticale (20) fixée dans le voisinage de la périphérie extérieure du capot d'isolation thermique, est guidée sur au moins une tige de guidage (16) s'étendant vers le bas, à partir du réservoir de pression (1), parallèlement à l'axe de ce dernier.

0 035 732

FIG 1

7

FIG 2

21

19

41

20

IV        IV

FIG 3

21a

W

X

12.3b

Y                    Z                         3          1

12.3a

12.3a              25

14                                              27

15

FIG 4

0 035 732

FIG 5

FIG 6

FIG 7

FIG 8

FIG 9